# EUROPEAN PATENT APPLICATION

(11) **EP 1 032 142 A2**
(43) Date of publication of application: **30.08.2000**
(21) Application number: 00102464.5
(22) Date of filing: 04.02.2000
(51) Int. Cl.: H04B 7/185

(54) **Spacecraft module interconnection structure**

(30) Priority: 23.02.1999 US 225887
(71) Applicant: TRW Inc., Redondo Beach, California 90278 (US)
(72) Inventor: Coronel, Ramon (NMN), Torrance, CA 90503 (US); Carbone, Jennifer B., Manhattan Beach, CA 90266 (US); Harkness, Gary T., Hermosa Beach, CA 90254 (US)
(74) Representative: Schmidt, Steffen J., Dipl.-Ing.

(57) **Abstract**

A communications structure, and a corresponding method, for transmission of data and other signals between electronic modules (14) of a spacecraft (10). The modules (14) each have at least one transmitter/receiver (20) through which the signals are communicated over a wireless local area network. In some spacecraft configurations, a system transmitter/receiver (22) may act as a relay or network router to forward messages to their intended destinations. In other configurations, there are multiple transmitter/receivers on each module, associated with separate components (24) or sub-modules. The multiple transmitter/receivers on a single module (14) communicate either directly to the system transmitter/receiver (22), or indirectly through a common module transmitter/receiver (20). In yet another embodiment of the invention, modules are located inside an enclosure and have transmitter/receivers that communicate with each other by broadcast wireless transmissions. Transmission of signals may be at optical, infrared or radio frequencies.

## Description

### BACKGROUND OF THE INVENTION

This invention relates generally to spacecraft and, more particularly, to techniques for interconnecting electronic modules on spacecraft. Spacecraft are typically configured as a number of modules or "boxes" that form separate functional units of the vehicle bus and payload. The payload includes modules used to perform the intended mission of the spacecraft, whereas the bus includes all of the modules needed to support the payload and transport the payload to its destination orbit. Stated another way, the payload includes only mission-specific modules, while the bus includes everything else.

To perform the intended functions of the spacecraft, mission information and command and control information must be transmitted between the various boxes or modules. For this purpose, the boxes are physically interconnected by massive cabling harnesses that criss-cross the spaces between the boxes. The cabling harnesses greatly increase the weight and the complexity of the overall spacecraft design.

Any changes to the spacecraft design are rendered much more difficult by the presence of the cabling harnesses, which may have to be rerouted or rewired to effect a desired change. Thus the harnesses inhibit technology improvements late in the design phase of the spacecraft. Even changing a single dysfunctional module is difficult and time consuming because many connectors must be disconnected and reconnected. Integration and testing of the spacecraft is also a complex task because of the presence of the cable harnesses and their connectors. Each cable harness has to be correctly connected and tested, and this procedure adds significantly to the cost of the spacecraft. Moreover, as noted above any errors detected during integration and testing may be extremely difficult to correct if rewiring is needed.

It will be appreciated, therefore, that there is an urgent need to eliminate cabling harnesses and the point-to-point signal distribution system of conventional spacecraft. The present invention satisfies this need and provides other important advantages over the conventional use of cabling harnesses for spacecraft module interconnection.

### SUMMARY OF THE INVENTION

The present invention resides in the use of a wireless local area network (LAN) for communication between spacecraft electronic modules. Briefly, and in general terms, the invention is embodied in a spacecraft module interconnection structure, comprising a spacecraft body; a plurality of spacecraft modules mounted on the spacecraft body; and a plurality of short-range transmitter/receivers incorporated into the spacecraft modules, for transmitting data from one module to another. The modules, therefore, require no inter-module wiring harnesses and thus, the overall system is more easily designed, integrated, tested and modified, if necessary.

The structure may further comprise a system transmitter/receiver mounted on the spacecraft body and positioned to receive from and transmit to the transmitter/receivers incorporated into the modules. In one form of the invention, at least one of the modules has a plurality of transmitter/receivers, each associated with a separate component on the module. Of these multiple transmitter/receivers on a single module, some may communicate directly with the system transmitter/receiver, and others may communicate with the system transmitter/receiver through a dedicated module transmitter/receiver located on the module.

In another embodiment of the invention, the modules are mounted inside an enclosure and the transmitter/receivers on the modules broadcast directly to each other.

Preferably, the transmitter/receivers together form a wireless local area network. Communication between transmitter/receivers may be by any convenient means, such as optical, infrared or radio frequency transmission.

The invention may also be defined as a method for communicating between spacecraft modules, comprising the steps of providing at least one transmitter/receiver on each of a plurality of spacecraft modules; forming a wireless local area network with the transmitter/receiver modules; and transmitting data over the wireless local area network, whereby no wiring harnesses are needed between modules. The method may further comprise the step of providing a system transmitter/receiver to participate as a network router when modules cannot communicate with each other directly. Additionally, the method may include the step of providing a dedicated module transmitter/receiver on at least one module, to participate as a network router for other transmitter/receivers on the same module.

It will be appreciated from the foregoing that the present invention represents a significant advance in the field of modular spacecraft design. In particular, the invention eliminates the cumbersome inter-module wiring that characterizes conventional spacecraft. Other aspects and advantages of the invention will become apparent from the following more detailed description, taken in conjunction with the accompanying drawings.

### BRIEF DESCRIPTION OF THE DRAWINGS

FIG. 1 is a simplified three-dimensional view of relevant portions of a spacecraft using the principles of the present invention;
FIG. 2 is a fragmentary view showing one electronics module in more detail and a portion of the spacecraft of FIG. 1; and
FIG. 3 is a simplified three-dimensional view showing modules installed in a conventional spacecraft module box employing the principles of the invention.

### DESCRIPTION OF THE PREFERRED EMBODIMENTS

As shown in the drawings for purposes of illustration, the present invention pertains to interconnection of electronic modules on spacecraft. In the past, modules have been interconnected by massive cabling harnesses that increase both the weight and the complexity of the spacecraft.

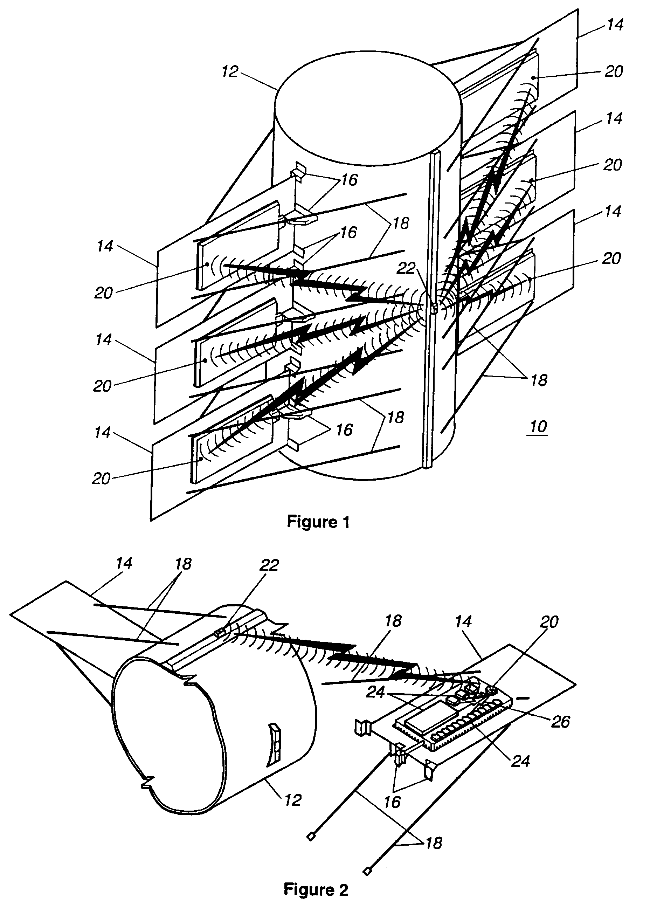

In accordance with the present invention, signals between modules are transmitted without wires, at infrared, optical or radio frequencies. FIG. 1 shows this inventive concept as applied to a modular spacecraft 10 of cylindrical configuration, comprising a cylindrical body 12 on which various modules 14 are mounted. Each module 14 takes the form of a rectangular panel on which components of the module are mounted. The modules 14 are oriented radially with respect to the cylindrical body 12 and are attached to the body 12 with mounting brackets 16 and support struts 18. Electrical power is supplied to each module through connectors (not shown) at the edge of the module adjacent to the body 12.

Each module 14 has at least one transmitter/receiver 20 for communicating with a system transmitter/receiver 22 mounted somewhere on the spacecraft body 12. As shown in FIG. 1, the system transmitter/receiver 22 is mounted in a position having a line-of-sight relationship with each of the module transmitter/receivers 20. It will be understood, however, that in some configurations the module transmitter/receivers 20 may communicate directly with each other.

FIG. 2 shows a fragmentary view of the spacecraft of FIG. 1, with one of the modules 14 separated from the body 12 to show more detail. The module 14 includes various components 24, each of which may have its own transmitter receiver, as indicated by the transmission paths 26 to the module transmitter/receiver 20. The components 24 may communicate directly with the system transmitter/receiver 22 or may communicate indirectly through the module transmitter/receiver 20.

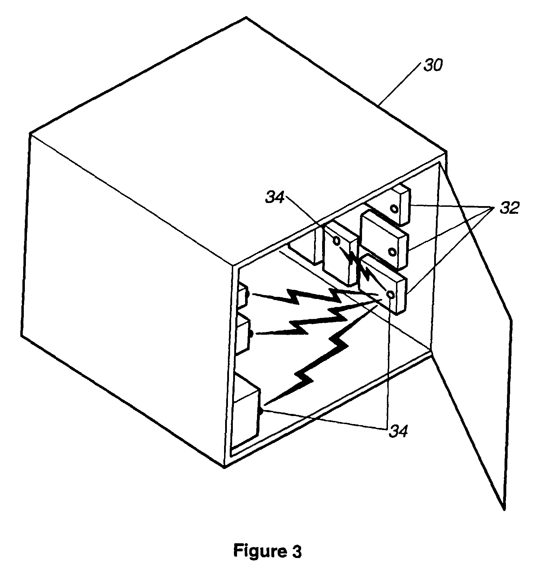

FIG. 3 depicts a spacecraft module box 30 similar to module boxes of traditional design. Modules or components 32 mounted inside the box 30 communicate by wireless means through transmitter/receivers 34 on the components 32.

Any of a number of communication protocols may be used for wireless communication between spacecraft modules or units. Perhaps the simplest approach is to configure the transmitter/receivers as nodes in a wireless local area network (LAN), using a conventional network communication protocol such as Ethernet. In a LAN, each node with data to transmit simply broadcasts a packet of data if the communication frequency is not already in use, and waits before trying again if a collision is detected. Alternatively, communication may be based on various types of multiplexing involving time division, frequency division, or other means.

Regardless of the specific communication protocol used, wireless communication between spacecraft modules and components greatly simplifies spacecraft design, manufacture and testing. Spacecraft modules can be more easily added to existing designs and all modules can be positioned without regard for wiring problems that often impose positioning restrictions. Integration and testing is, of course, also facilitated and may be performed in a wireless mode without making electrical connections with the various modules.

It will be appreciated from the foregoing that the present invention represents a significant advance in the field of modular spacecraft design. In particular, use of wireless inter-module communication simplifies practically all aspects of spacecraft design, integration, testing and modification. An important additional benefit is that the weight, complexity and cost of the spacecraft are all significantly reduced. It will also be appreciated that, although several embodiments of the invention have been described in detail for purposes of illustration, various modifications may be made without departing from the spirit and scope of the invention. Accordingly, the invention should not be limited except as by the following claims.

## Claims

1. A spacecraft module interconnection structure, comprising:
a spacecraft body;
a plurality of spacecraft modules mounted on the spacecraft body; and
a plurality of short-range transmitter/receivers incorporated into the spacecraft modules, for transmitting data from one module to another;
whereby the modules require no inter-module wiring harnesses.

2. A spacecraft module interconnection structure as defined in claim 1, and further comprising:
a system transmitter/receiver mounted on the spacecraft body and positioned to receive from and transmit to the transmitter/receivers incorporated into the modules.

3. A spacecraft module interconnection structure as defined in claim 2, wherein at least one of the modules has a plurality of transmitter/receivers, each associated with a separate component on the module.

4. A spacecraft module interconnection structure as defined in claim 1, wherein:
the modules are mounted inside an enclosure; and
the transmitter/receivers on the modules broadcast directly to each other.

5. A method for communicating between spacecraft modules, comprising the steps of:
providing at least one transmitter/receiver on each of a plurality of spacecraft modules;
forming a wireless local area network with the transmitter/receiver modules; and
transmitting data over the wireless local area network, whereby no wiring harnesses are needed between modules.

6. A method as defined in claim 5, and further comprising the step of providing a system transmitter/receiver to participate as a network router when modules cannot communicate with each other directly.

7. A method as defined in claim 6, and further comprising the step of providing a dedicated module transmitter/receiver on at least one module, to participate as a network router for other transmitter/receivers on the same module.
